# EUROPEAN PATENT APPLICATION

(11) **EP 1 486 859 A1**
(43) Date of publication of application: **15.12.2004**
(21) Application number: 03743558.3
(22) Date of filing: 03.03.2003
(51) Int. Cl.: G06F 3/00, G06F 17/30

(54) **DATA OUTPUT METHOD, SERVER DEVICE, AND INFORMATION PROCESSING DEVICE**

(30) Priority: 04.03.2002 JP 2002056897
(71) Applicant: MATSUSHITA ELECTRIC INDUSTRIAL CO., LTD., Kadoma-shi, Osaka 571-8501 (JP)
(72) Inventor: NISHII, Yoshimi, Takatsuki-shi, Osaka 569-0022 (JP); SHOMURA, Yume, Hirakata-shi, Osaka 573-0036 (JP); IKEDA, Takumi, Kobe-shi, Hyogo 651-0053 (JP)
(74) Representative: Grünecker, Kinkeldey, Stockmair & Schwanhäusser Anwaltssozietät
(86) International application number: PCT/JP2003/002436
(87) International publication number: WO 2003/075143

(57) **Abstract**

A data output method includes a selection instruction reception step for receiving a button selection instruction for selecting one of two or more buttons realizing the same function and having different attribute values, which buttons are displayed on an input screen, a selection instruction information recording step of recording selection instruction information which is information on a button selection instruction according to the selection instruction received in the selection instruction reception step, and a data output step of changing data to be output according to the selection instruction information recorded in the selection instruction information recording step and outputting the data. Thus it is possible to output data appropriate for a user without inputting the user individual attribute.

## Description

### Technical Field

The present invention relates to a method of outputting data, and an information processing device that outputs data available in a server device.

### Background Art

Recently a large number of data called "home page" are available on the Internet, and they are accessible from all over the world. On the other hand, there is an oversupply of data, and people actually encounter a number of unwanted data as well as incomprehensible data. There have been no ideas such as thinking about a way of showing data, or about showing a most preferable data first in decreasing order.

A technique has been developed to overcome those problems: Personal attributes (sex, age, hobby, and so on) are input first, and the data agreeing with the attributes are displayed. However, this prior art has not enjoyed popularity because it requires time and labor for inputting the personal attributes, and yet, those attributes are subject to leakage.

### Disclosure of the Invention

A method of outputting data is disclosed. Plural buttons, which embody an identical function respectively and have different attribute values, are displayed on an input screen. The method comprises the following steps:
a selection instruction reception step for receiving a button selection instruction for selecting one button out of the plural buttons;
a selection instruction information recording step for recording selection instruction information related to the one button based on the selection instruction received at the selection instruction reception step; and
a data output step for changing data to be output based on the selection instruction information recorded in the selection instruction information recording step and outputting the data.

### Brief Description of the Drawings

Fig. 1 shows a block diagram illustrating an information processing system in accordance with a first exemplary embodiment.
Fig. 2 shows a flowchart illustrating an operation of a server device in accordance with the first exemplary embodiment.
Fig. 3 shows a flowchart illustrating an operation of an information processing device in accordance with the first exemplary embodiment.
Fig. 4 shows an example of a home page in accordance with the first embodiment.
Fig. 5 shows an example of a home page in accordance with the first embodiment.
Fig. 6 shows an example of a script of the home page in accordance with the first embodiment.
Fig. 7 shows an example of data forming the home page in accordance with the first embodiment.
Fig. 8 shows an example of a home page in accordance with the first embodiment.
Fig. 9 shows an example of a home page in accordance with the first embodiment.
Fig. 10 shows an example of a home page in accordance with the first embodiment.
Fig. 11 shows a correlation table including data and their corresponding data-types in accordance with the first embodiment.
Fig. 12 shows a correlation table including data types and their corresponding buttons in accordance with the first embodiment.
Fig. 13 shows an example of a home page in accordance with the first embodiment.
Fig. 14 shows an example of a home page in accordance with the first embodiment.
Fig. 15 shows an example of a home page in accordance with the first embodiment.
Fig. 16 shows an example of a home page in accordance with the first embodiment.
Fig. 17 shows an example of a home page in accordance with the first embodiment.
Fig. 18 shows an example of a home page in accordance with the first embodiment.
Fig. 19 shows an example of a home page in accordance with the first embodiment.
Fig. 20 shows an example of a home page in accordance with the first embodiment.
Fig. 21 shows a block diagram illustrating an information processing system in accordance with a second exemplary embodiment.
Fig. 22 shows a flowchart illustrating an operation of a server device in accordance with the second exemplary embodiment.
Fig. 23 shows a history of selection instruction information in accordance with the second embodiment.
Fig. 24 shows an example of a home page in accordance with the second embodiment.
Fig. 25 shows an example of a home page in accordance with the second embodiment.
Fig. 26 shows a block diagram illustrating an information processing system in accordance with a third exemplary embodiment.
Fig. 27 shows a flowchart illustrating an operation of a server device in accordance with the third exemplary embodiment.
Fig. 28 shows a flowchart illustrating an operation of an information processing device in accordance with the third embodiment.
Fig. 29 shows a block diagram illustrating an information processing system in accordance with a fourth exemplary embodiment.
Fig. 30 shows a flowchart illustrating an operation of an information processing device in accordance with the fourth embodiment.

### Detailed Description of the Preferred Embodiments of the Invention

Exemplary embodiments are demonstrated hereinafter with reference to the accompanying drawings. Structural elements having the same reference marks as those in other embodiments work in a similar way to those in other embodiments, the descriptions of those elements are thus sometimes omitted.

### Exemplary Embodiment 1

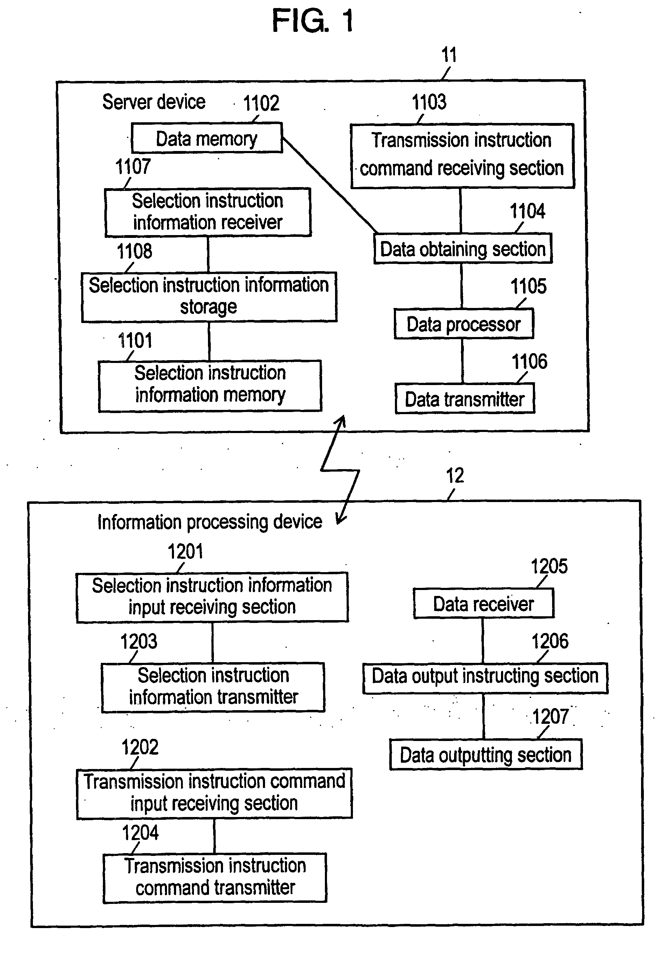

Fig. 1 shows a block diagram illustrating an information processing system in accordance with the first embodiment, which system includes server device 11 and information processing device 12.

Server device 11 comprises the following elements:
selection instruction information memory 1101;
data memory 1102;
transmission instruction command receiver 1103;
data obtaining section 1104;
data processor 1105;
data transmitter 1106;
selection instruction information receiver 1107; and
selection instruction information storage 1108.

Information processing device 12 comprises the following elements:
selection instruction information input receiving section 1201;
transmission instruction command input receiving section 1202;
selection instruction information transmitter 1203;
transmission instruction command transmitter 1204;
data receiver 1205;
data output instructing section 1206; and
data outputting section 1207.

Selection instruction information memory 1101 stores one or plural pieces of selection instruction information. When two or more than two buttons that embody the same function but have different attributes are available, this information shows which button is selected. This selection instruction information is transmitted from information processing device 12. Memory 1101 can be a nonvolatile recording medium, or a volatile recording medium.

Data memory 1102 stores one pair or plural pairs of data identifier and data. The data identifier can be any information that can identify data, such as URL. Data memory 1102 is generally a nonvolatile recording medium such as a hard-disc; however, a volatile recording medium is acceptable.

Transmission instruction command receiver 1103 receives a transmission instruction command of data having a data identifier, and can be formed of a radio communication means or a wire communication means, and yet, can be also formed of a broadcast receiving means.

Data obtaining section 1104 obtains data from data memory 1102, this data makes a pair with the data identifier owned by the transmission instruction command received by transmission instruction command receiver 1103. Data obtaining section 1104 is generally formed of software; however it can be formed of an exclusive circuit (hardware).

Data processor 1105 provides the data obtained by data obtaining section 1104 with a given process based on plural pieces of selection instruction information stored in memory 1101. The given process includes filtering the data, rearranging sub-data forming the data for constructing a data which gives a different view to a user, translating sentences in the data, converting "kanji" letters in the data into "hiragana" letters, or vice versa, selecting one data out of plural data to be output, and other processes.

Data transmitter 1106 transmits the data processed by data processor 1105, and is generally formed of a radio communication means or a wire communication means; however, it can be formed of a broadcasting means.

Selection instruction information receiver 1107 receives the selection instruction information transmitted from information processing device 12, and is generally formed of a wire or radio communication means; however, it can be formed of a broadcast receiving means (tuner and its driver software).

Selection instruction information storage 1108 stores the selection instruction information received by receiver 1107 in selection instruction information memory 1101. The selection instruction information stored in memory 1101 can be stored by another means. In other words, receiver 1107 and storage 1108 are not essential structural elements.

Selection instruction information input receiving section 1201 receives an input of the selection instruction information, and is formed of, e.g. driver software of a mouse or that of a keyboard.

Transmission instruction command input receiving section 1202 receives an input of the transmission instruction command, and is formed of, e.g. driver software of a mouse or that of a keyboard.

Selection instruction information transmitter 1203 transmits the selection instruction information received by receiving section 1201, and is formed of a wire or radio communication means: however, it can be formed of a broadcasting means.

Transmission instruction command transmitter 1204 transmits the transmission instruction command received by receiving section 1202, and is formed of a wire or radio communication means; however, it can be formed of a broadcasting means.

Data receiver 1205 receives the data transmitted from server device 11, and is generally formed of a wire or radio communication means; however, it can be formed of a broadcast receiving means.

Data output instructing section 1206 instructs data outputting section 1207 to output the data received by data receiver 1205, and is generally formed of software; however, it can be formed of an exclusive circuit (hardware). The output here means mainly a display; however, it can be a printing or transmission to another device. This is applicable to other descriptions in the present specification.

Data outputting section 1207 outputs the data following an instruction of data output instructing section 1206, and is formed of a liquid crystal display or a CRT. Section 1207 is not an essential structural element, namely, information processing device 12 can instruct a data outputting section (e.g. display) separated from processing device 12 to output data.

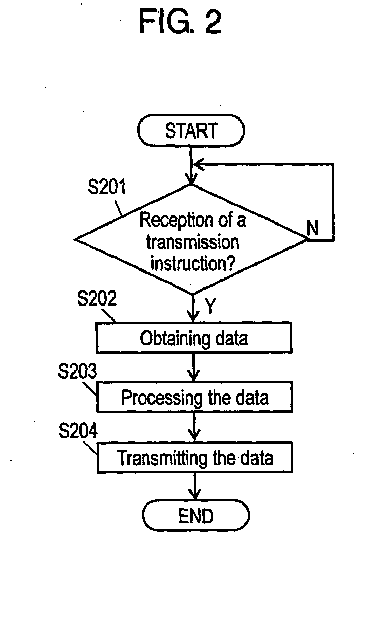

An operation of server device 11 in accordance with the first embodiment is demonstrated hereinafter with reference to the flowchart shown in Fig. 2.

Step S201: Transmission instruction command receiver 1103 and selection instruction information receiver 1107 determine whether or not they receive a transmission instruction command and selection instruction command respectively. Reception of the command and the information prompts the step to move on to step S202, and non-reception returns the step to S202. The transmission instruction command includes a data identifier, which sometimes agree with the selection instruction information. Transmission instruction command receiver 1103 and selection instruction information receiver 1107 can be embodied physically by the same hardware.

Step S202: Data obtaining section 1104 obtains the data from data memory 1102, where the data is identified by a data identifier owned by the transmission instruction command received by receiver 1103.

Step S203: Data processor 1105 provides the data obtained in step S202 with a given process based on the selection instruction information received in step S201. The given process includes filtering the data, rearranging sub-data, translating sentences in the data, converting "kanji" in the data into "hiragana", or vice versa, and other processes. Data processor 1105 sometimes provides the data with a given process based on the selection instruction information received in step S201; however, sometimes provides the data with a given process based on the selection instruction information stored in selection instruction information memory 1101. In the latter case, the information stored in memory 1101 has been transmitted in advance from information processing device 12 to the server device, and the information is selected by selection instruction information receiver 1107, and stored by selection instruction information storage 1108.

Step S204: Data transmitter 1106 transmits the data processed in step S203 to information processing device 12.

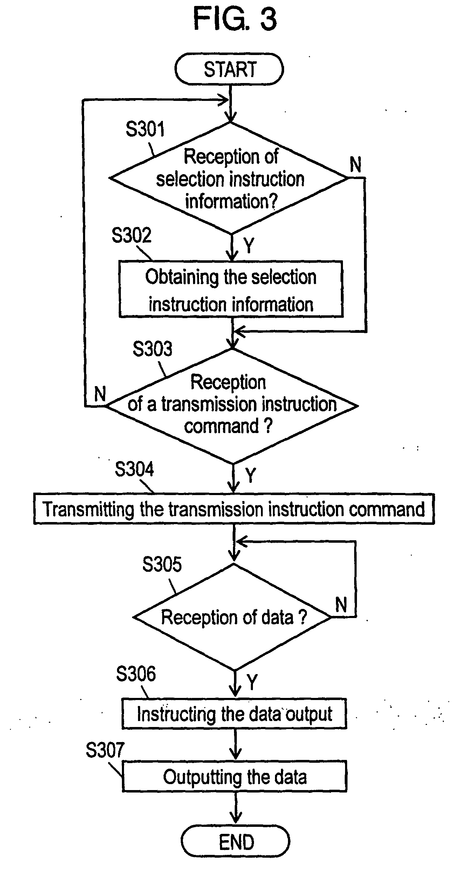

Next, an operation of information processing device 12 in accordance with the first embodiment is demonstrated with reference to the flowchart shown in Fig. 3.

Step S301: Selection instruction information input receiving section 1201 determines whether or not it receives an input of the selection instruction information. Reception of the input prompts the step to move on to step S302, and non-reception prompts the step to jump to step S303.

Step S302: Selection instruction information transmitter 1203 obtains the selection instruction information received in step S301.

Step S303: Transmission instruction command input receiving section 1202 determines whether or not it receives an input of the transmission instruction command. Reception of the input prompts the step move on to step S304, and non-reception prompts the step to return to step S301. One data is sometimes commonly used as the selection instruction information and the transmission instruction command. In such a case, receiving sections 1201 and 1202 are identical.

Step S304: Transmission instruction command transmitter 1204 transmits the transmission instruction command, and transmitter 1203 transmits the selection instruction information. However, when no selection instruction information is available, transmitter 1203 does not do anything. Transmitters 1203 and 1204 are sometimes formed of physically an identical hardware. One data is sometimes commonly used as the selection instruction information and the transmission instruction command. In such a case, transmitters 1203 and 1204 are identical.

Step S305: Data receiver 1205 determines whether or not it receives data from server device 1. The reception of the data prompts the step to move on to step S306, and non-reception prompts the step to return to step S305.

Step S306: Data output instructing section 1206 instructs an output of the data received in step S305.

Step S307: Data outputting section 1207 outputs the data.

An instance of the information processing system in accordance with the first embodiment is specifically described hereinafter. The system is formed of a server device on the Internet and an information processing device (client). The server device stores a large number of homepages (hereinafter sometimes referred to simply as HP) as data. In the foregoing status, an instance where the given process done by the data processor is a rearrangement of the data is described hereinafter.

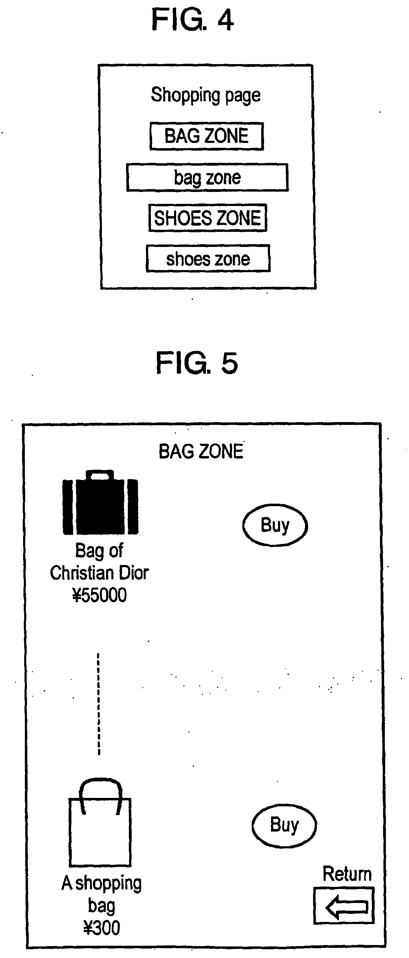

The information processing device displays a HP shown in Fig. 4. "BAG ZONE" (described in kanji letter) and "bag zone" (described in hiragana letters) indicate buttons (called also a hotspot) for jumping to the same HP. Selection of the "BAG ZONE" button prompts the data processor of the server device to treat this selection such that an adult selects the page, and to change descriptions of the script describing the pages such as HTML, i.e. an expensive bag comes first on the page in decreasing order of the price for inviting adults to buy some bag.
(In this case, the kanji letter and hiragana letter are used for differentiating the goods in the same category, the kanji letter indicates expensive goods, and hiragana letter indicates inexpensive goods. The words of "BAG ZONE" and "bag zone" correspond to "kanji letter" and "hiragana letter" respectively.) The following instance is available for rearranging the data in the HP:

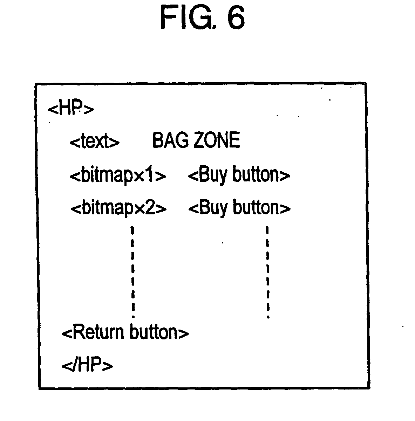

For instance, a description in the HP shown in Fig. 6 is available, in which a bitmap and a purchasing button are paired on one line respectively, and those pairs are arranged in column. Selection of the button with kanji letters thereon, e.g. ''BAG ZONE", places bitmaps, which construct the data (HP), having a greater attribute value (a higher price in this case) on an upper column, and selection of the button with hiragana letters thereon, e.g. "bag zone" places the bitmaps having a smaller attribute value (a lower price in this case) on an upper column.

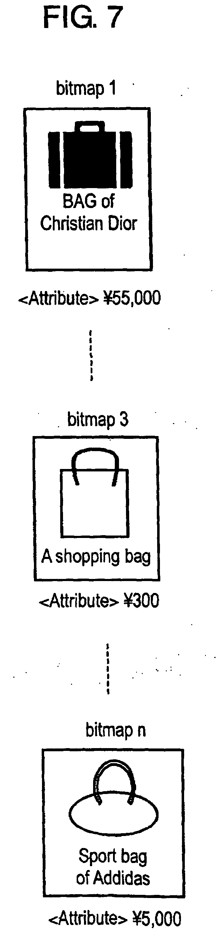

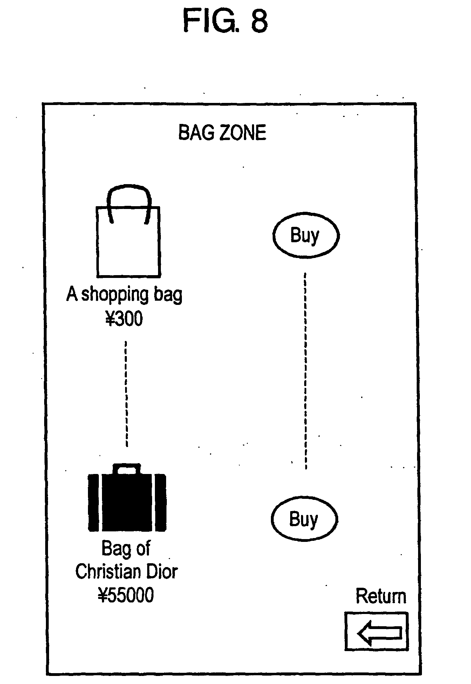

In the processes prepared as discussed above, depression of the "BAG ZONE" button prompts the server device to edit the HP as shown in Fig. 5, and transmit it to the information processing device for displaying the HP of Fig. 5. Sub-data forming the data are stored in the server device as shown in Fig. 7, which illustrates that each sub-data includes a video, identifier (e.g. bitmap 1) for identifying the video, and an attribute value (price). On the other hand, depression of the "bag zone" button prompts the server device to edit the HP where a less expensive bag is listed on the upper column, and to transmit the HP to the information processing device for outputting the HP shown in Fig. 8.

As discussed above, the server device changes the arrangement of sub-data forming the HP depending on the button a user depresses, and the information processing device outputs the HP.

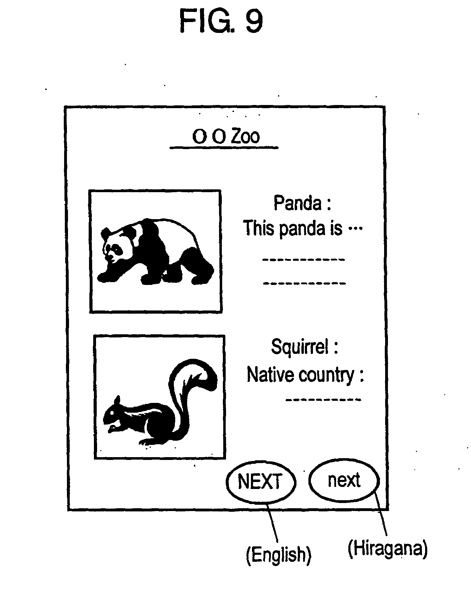

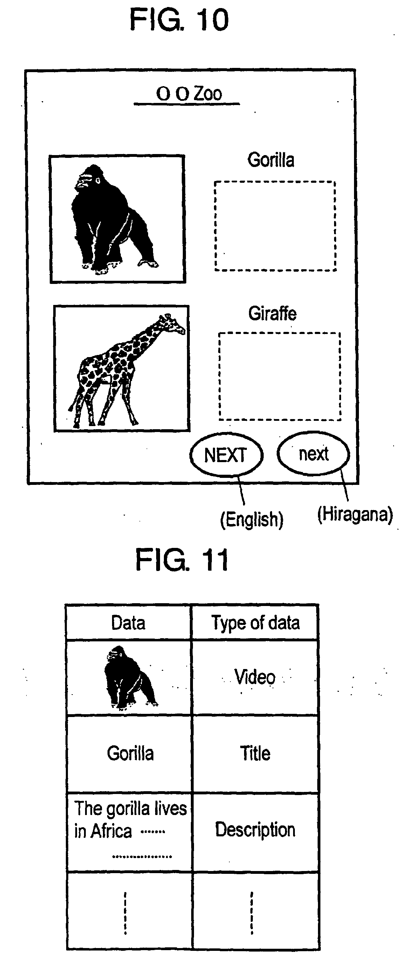

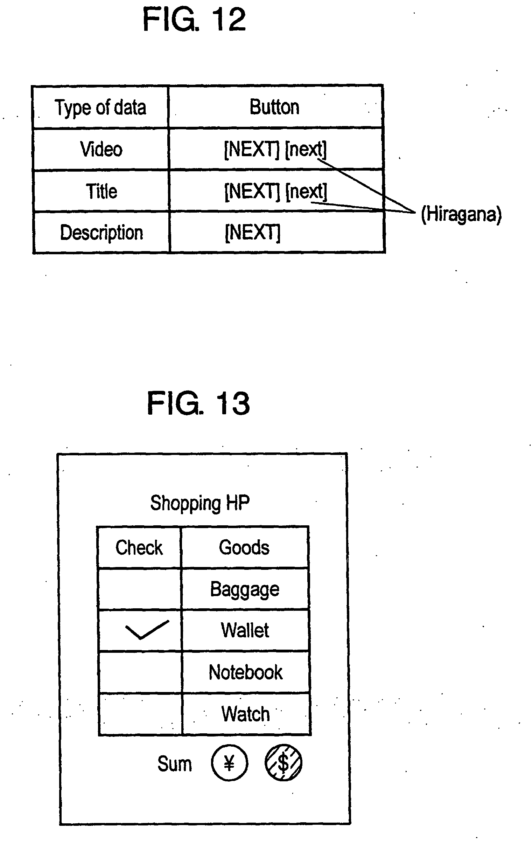

Next, suppose the given process at the data processor is data filtering. This case is detailed hereinafter. Ahomepage of ○○ zoo as shown in Fig. 9 is displayed on an information processing device. To be more specific, the HP of ○○ zoo shows video data on the left and an animal name, its description including its native place on the right in general. For the users to move on to the next page, a button with "NEXT" (in English) on it and another button with "next" (in hiragana letters) on it are prepared. Depression of the "next" button displays the next page as shown in Fig. 10, where the description of an animal is omitted. Because the server device determines that the "next" button is often selected by a child, so that the server device edits the HP without detailed description of the animal. The procedure of editing the HP can be as follows: A correlation table, shown in Fig. 11, listing data and their types is available. The data on the HP are divided into groups by the data types. There is also a correlation table, as shown in Fig. 12, listing the data types and buttons. The table in Fig. 12 illustrates which group of data is output by depressing which button. Video data is output when the "NEXT" (English) button or the "next" (hiragana) button is depressed; however, description data is output only when the "NEXT" button is depressed. The foregoing technique allows filtering the data. Another algorithm of data-filtering can be used. As discussed above, depression of a button by a user prompts the server device to filter the data, thereby editing the HP, and the information processing device outputs the HP.

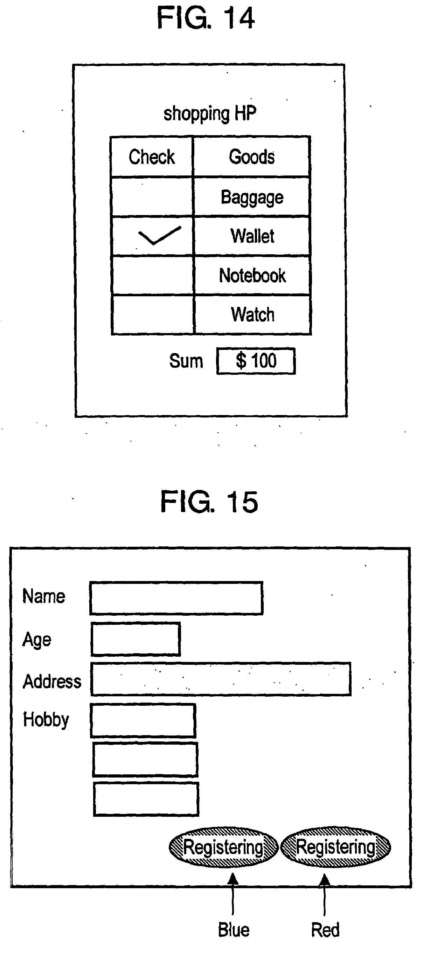

Next, suppose the given process at the data processor is translation of the data. This case is detailed hereinafter. A "shopping HP" shown in Fig. 13 is available in the server device, and the information processing device retrieves and displays this HP. When a user selects goods and calculates a total amount, the user hits a button with "¥" on it or a button with "$" on it. Depression of the "$" button results in calculating the total amount and moves on to the next page described in English as shown in Fig. 14. In other words, the information about depression of "$". button is transmitted from the information processing device to the server device, which translates the Japanese description in the HP into English and calculates the total amount in dollar. The server device then edits the HP in English and transmits it to the information processing device, which receives the HP and displays the HP as shown in Fig. 14 where the total amount in dollar is shown. As discussed above, the server device translates the HP depending on which button is depressed by a user, and the information processing device displays the HP translated. In this example, Japanese is translated into English; however, English can be translated into Japanese, or another language can be used.

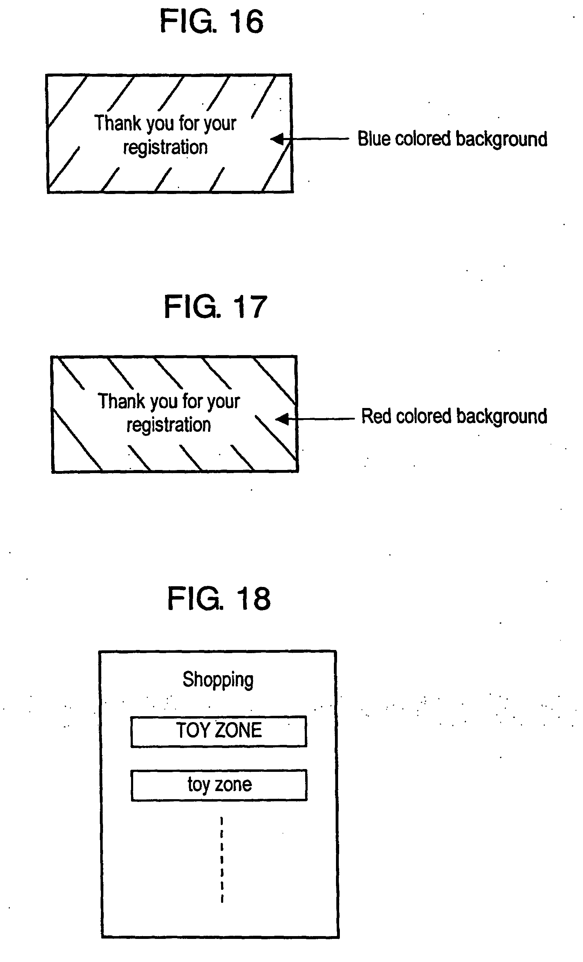

Next, suppose the given process at the data processor is change of an attribute value of a HP or data. This case is detailed hereinafter. A homepage as shown in Fig. 15 to be used for registering users is available in the server device, and the information processing device obtains the HP and displays it. This HP shows two registering buttons, one is a blue colored registering button, and another is a red colored registering button. Depression of this blue button results in outputting a page with blue colored background shown in Fig. 16, and depression of red registering button results in outputting a page with red colored background shown in Fig. 17. The server device changes the background of the HP to blue color or red color, thereby achieving what is discussed above. The depression of the button by a user prompts the server device to change an attribute value (background color, letter font, letter size and others) of the HP, and the information processing device displays the HP. In this example, the attribute value of the HP is changed; however, an attribute value of sub-data which form the HP can be changed. In this example, two buttons colored corresponding to different background colors are prepared; however, two or more than two buttons having different letter sizes or different fonts thereon can be prepared, or two or more than two buttons having different shapes can be prepared.

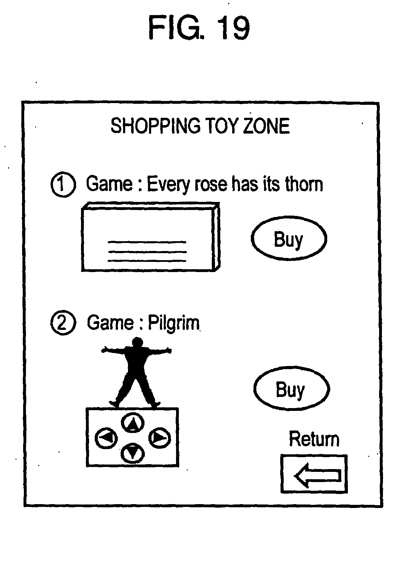

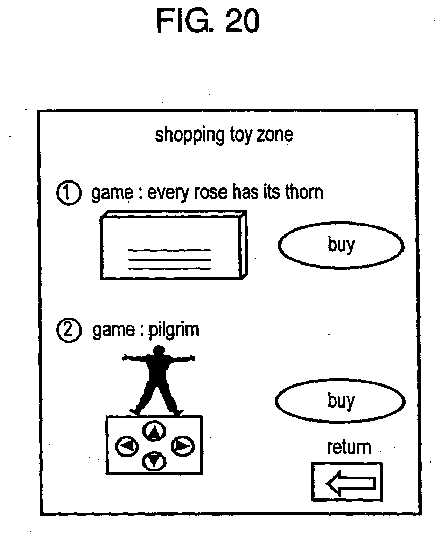

Next, suppose the given process at the data processor is conversion of hiragana letters into kanji letters. This case is detailed hereinafter. A shopping HP as shown in Fig. 18 is available in the server device, and the information processing device displays this HP. The HP includes two buttons for moving on to "TOY ZONE" (in kanji letters) and "toy zone"(in hiragana letters) although the content of the two zones are identical and shown in the same HP. Depression of the "TOY ZONE" button results in displaying the HP described in kanji letters as shown in Fig. 19. Suppose that the server device has stored the HP described in hiragana letters as shown in Fig. 20. The information about depression of the "TOY ZONE" button is transmitted to the server device, which then converts the letter string of hiragana of the HP into kanji letters, and edits the HP shown in Fig. 19. The information processing device obtains and displays this HP edited. Since the process of how to convert hiragana letters into kanji letters is a known technique, the description of the process is omitted here.

In this example, the HP in hiragana letters is converted into kanji letters; however, the server device can have stored the kanji HP as shown in Fig. 19, and depression of "toy zone" button can convert it into the HP shown in Fig. 20.

Next, suppose the given process at the data processor is selection of a HP (data). This case is detailed hereinafter. The HP shown in Fig. 18 is displayed by the information processing device, and the HPs shown in Figs. 19 and 20 are stored in the server device. Depression of the "TOY ZONE" button results in selecting the HP shown in Fig. 19, and depression of the "toy zone" button results in selecting the HP shown in Fig. 20. This selection is done by the server device.

As discussed above, the first exemplary embodiment proves a method of outputting data when two or more than two buttons having different attribute values are prepared on an input screen for executing an identical function, which method comprises the following steps:
a step of receiving a selection instruction of one button;
a step of recording selection instruction information about the selection instruction of the one button based on the selection instruction received in the previous step; and
a step of outputting data changed in response to the selection instruction information recorded in the above recording step.
The recording described in one of the above steps includes a temporary recording in a temporary memory such as a cache. This meaning of the recording is applicable to other descriptions of the recording in this specification.

- According to the foregoing method, plural buttons (inclusive hotspots) are prepared, which buttons have an identical function or meaning but having different attribute values (color, shape, output letter, output place, and font, size and color of output letter), so that data can be provided in response to a button depressed. Therefore, tastes or attributes (a Japanese, an American or another) of users can be easily reflected to data output. Even if the selection instruction information cannot be reflected to the data output, the information is transmitted to the server device, thereby analyzing users' tastes with ease.

In this first embodiment, the case where two buttons having an identical function or meaning are prepared is focused; however, three or more buttons can be available. In such a case, data corresponding to the respective buttons can be output, so that more detailed data can be supplied. This is applicable to other embodiments of the specification.

The process discussed in the first embodiment can be formed of software, and this software can be distributed by downloading the software, or by recording the software into a recording medium such as a CD-ROM. This is also applicable to other embodiments of the specification.

In this embodiment, the data processor executes one process at one time; however, the data processor executes plural processes (e.g. conversion of kanji letters into hiragana letters, and data filtering) at one time.

In the first embodiment, the process in the form of server-client is described; however, the information processing device, which can executes the steps below, can be available in a standalone form. To be more specific, a method of outputting data when two or more than two buttons having different attribute values are prepared on an input screen for executing an identical function, which method comprises the following steps:
a step of receiving a selection instruction of one button;
a step of recording selection instruction information about the selection instruction of the one button based on the selection instruction received in the above step; and
a step of outputting data changed in response to the selection instruction information recorded in the above recording step.
Processing by the standalone form instead of the server-client form can be applicable to the other embodiments.

Further in the first embodiment, an identifier for identifying a user (inclusive an information processing device used by the user) can be transmitted from the information processing device to the server device together with a transmission instruction command. This is applicable to the embodiments below.

### Exemplary Embodiment 2

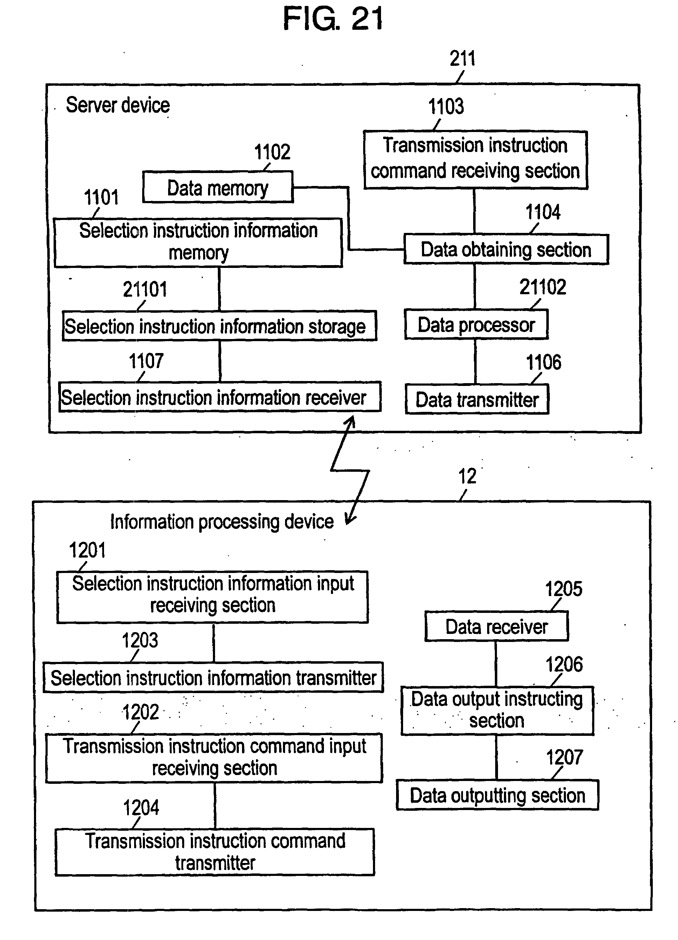

Fig. 21 shows a block diagram illustrating an information processing system including server device 211 and information processing device 12.

Server device 211 comprising the following elements:
selection instruction information memory 1101;
data memory 1102;
transmission instruction command receiver 1103;
data obtaining section 1104;
data processor 21102;
data transmitter 1106;
selection instruction information receiver 1107; and
selection instruction information storage 21101.

Selection instruction information storage 21101 stores one or plural pieces of selection instruction information in memory 1101. Storage 21101 is generally formed of software; however, it can be formed of an exclusive circuit (hardware).

Data processor 21102 provides the data obtained by data obtaining section 1104 with a given process based on one or plural pieces of selection instruction information stored. The given process includes filtering the data, rearranging sub-data forming the data for constructing a data which gives a different view to a user, translating sentences in the data, converting "kanji" letters in the data into "hiragana" letters, or vice versa, selecting one data out of plural data to be output, and other processes. Data processor 21102 is generally formed of software; however, it can be formed of an exclusive circuit (hardware).

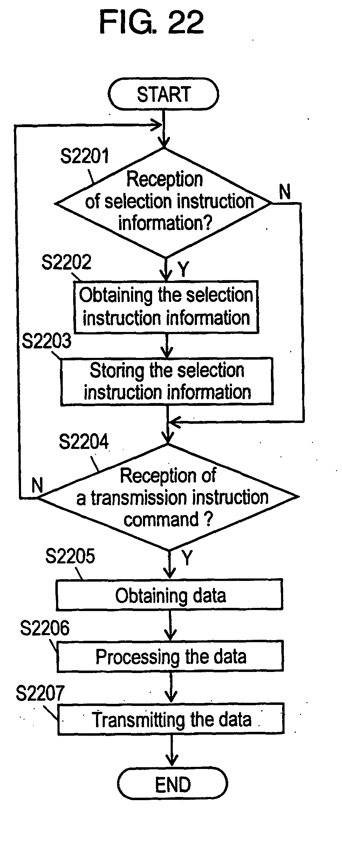

An operation of server device 211 in accordance with the second embodiment is demonstrated hereinafter with reference to the flowchart shown in Fig. 22.

Step S2201: Selection instruction information receiver 1107 determines whether or not it receives one piece or plural pieces of selection instruction information. The reception prompts the step to move on to step S2202, and non-reception prompts the step to jump to step S2204.

Step S2202: Selection instruction information storage 21101 obtains plural pieces of selection instruction information.

Step S2203: Selection instruction information storage 21101 stores the one piece or plural pieces of selection instruction information obtained in step S2202 in selection instruction information memory 1101.

Step S2204: Transmission instruction command receiver 1103 determines whether or not it receives a transmission instruction command. The reception of the command prompts the step to move on to step S2205, and non-reception returns the step to step S2201.

Step S2205: Data obtaining section 1104 obtains the data from data memory 1102, which data is identified by a data identifier owned by the transmission instruction command received by transmission instruction command receiver 1103.

Step S2206: Data processor 21102 provides the data obtained in step S2205 with a given process based on one piece or plural pieces of selection instruction information stored in memory 1101. The given process includes data filtering, translation, conversion of hiragana letters into kanji letters or vice versa, rearrangement of sub-data or others.

Step S2207: Data transmitter 1106 transmits the data processed in step S2206 to information processing device 12.

An example of the information processing system in accordance with the second embodiment is specifically demonstrated hereinafter. The system is formed of a server device and an information processing device (client) disposed on the Internet, and the server device stores a large number of homepages (HP) as data.

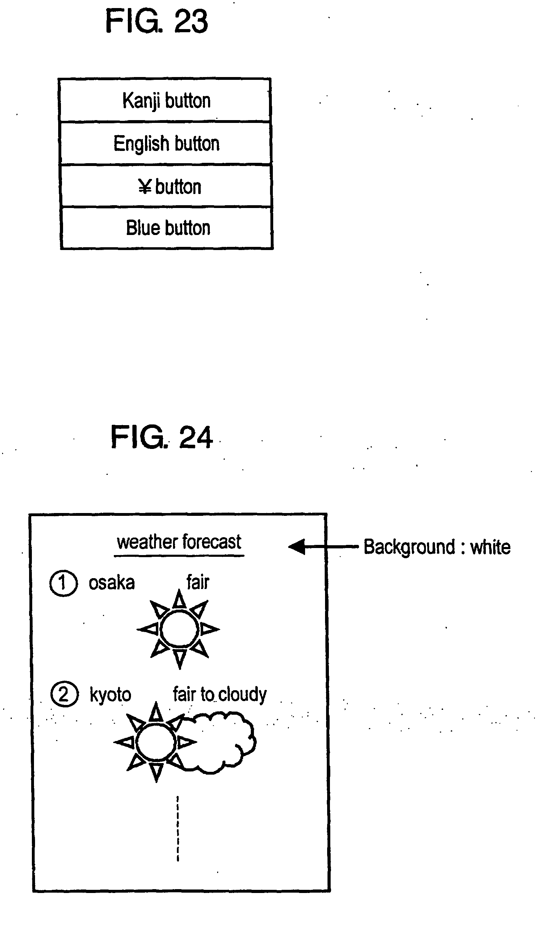

Suppose a user of an information processing terminal has worked on the HP as follows, which HP displays two or more than two buttons having different attribute values but executing an identical function:
Viewing the HP shown in Fig. 4, the user depressed the "BAG ZONE" (in kanji letter) button instead of the ''bag zone" (in hiragana letters) button. The user then depresses the "NEXT" button in English instead of the "next" button in hiragana letters in Fig. 9. The user further depresses the "¥" button instead of the "$" button shown in Fig. 13. Then the user depresses the blue colored "registering" button instead of red colored "registering" button in Fig. 15. In the status discussed above, the selection instruction information is stored sequentially in memory 1101, and the information is stored by storage 21101. The selection instruction information here is an attribute value of one of the buttons. To be more specific, "BAG ZONE" button has an attribute value of a button with kanji letters thereon", "NEXT" button means a button with English thereon, the "¥" button has means a button with "¥" thereon, and the blue colored registering button means a blue colored button. As such each one of those attribute values is the selection instruction information. Therefore, as shown in Fig. 23, the history of the selection instruction information is stored in the selection instruction information memory.

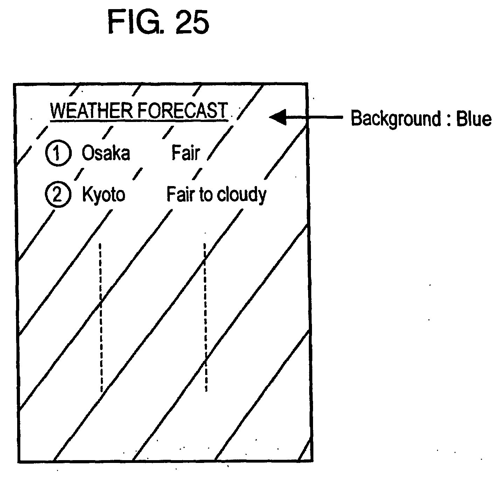

In such a case, when the information processing device requests the server device to transmit data, the server device searches the data memory for the target data, and provides the target data with data conversion (data processing) by using four pieces of selection instruction information. For instance, a HP in Fig. 24 showing a weather forecast written in hiragana letters for children to easily understand is stored in the data memory, and the selection instruction information shown in Fig. 23 is also stored in the memory. In this case, this HP is converted into the one for an adult, a Japanese, a male who's favorite color is blue. The server device thus converts the HP shown in Fig. 24 into the HP in Fig. 25. The conversion includes change of hiragana letters to kanji letters, filtering of a video not to show, change of the background color to blue. Another algorithm of HP conversion can be used.

According to the foregoing method, plural buttons (inclusive hotspots) are prepared, which buttons have an identical function or meaning but having different attribute values (color, shape, output letter, output place, and font, size and color of output letter), so that data can be provided in response to a button depressed. And yet, the data in response to the depression of plural buttons can be provided. Therefore, tastes or attributes (a Japanese, an American or another) of users can be easily reflected to data output. Further in the second embodiment, an identifier for identifying a user (inclusive an information processing device used by the user) can be transmitted from the information processing device to the server device together with a transmission instruction command. In such a case, histories of selection instruction information of respective users are stored in the selection instruction information memory. When a user sends a transmission instruction command of data to the server device, the server device searches the memory for the selection instruction information by using an identifier sent together with the transmission instruction command as a key, so that the identifier is used for data processing.

### Exemplary Embodiment 3

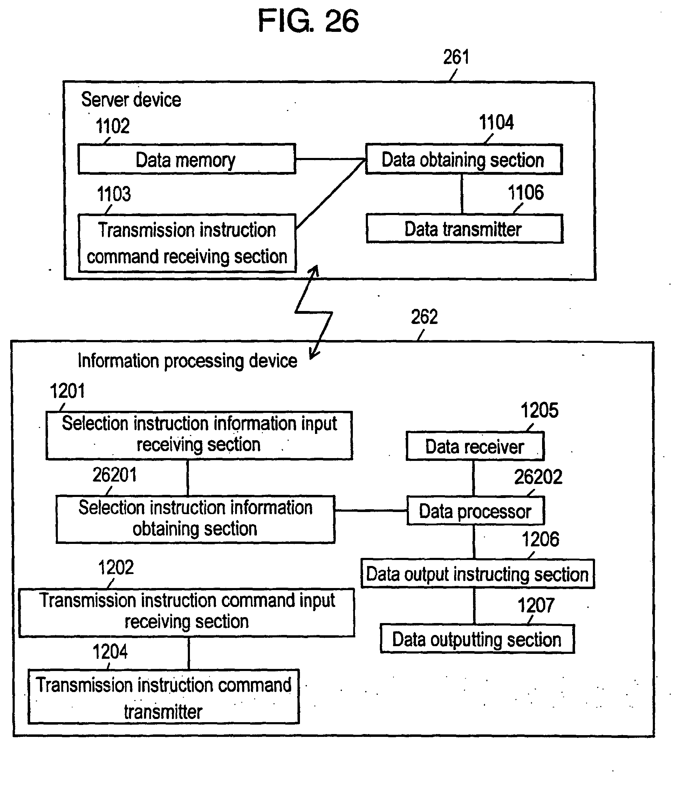

Fig. 26 shows a block diagram illustrating an information processing system formed of server device 261 and information processing device 262 in accordance with the third exemplary embodiment.

Server device 261 comprises the following elements:
data memory 1102;
transmission instruction command receiver 1103;
data obtaining section 1104; and
data transmitter 1106.

Information processing device 262 comprising the following elements:
selection instruction information input receiving section 1201;
selection instruction information obtaining section 26201;
transmission instruction command input receiving section 1202;
transmission instruction command transmitter 1204;
data receiver 1205;
data output instructing section 1206;
data outputting section 1207; and
data processor 26202.

Selection instruction information obtaining section 26201 obtains the selection instruction information received by selection instruction information input receiving section 1201 and stores the information. This storing place can be a temporary memory such as a cache memory or a non-volatile memory such as a hard disc. Selection instruction information obtaining section 26201 is generally formed of software; however, it can be formed of an exclusive circuit (hardware). Obtaining section 26201 can include a recording medium such as a cache memory or a hard disc, or it can exclude such a recording medium.

Data processor 26202 provides the data received by data receiver 1205 with a given process based on one piece or plural pieces of selection instruction information obtained by obtaining section 26201. The given process here includes filtering the data, rearranging sub-data forming the data for constructing a data which gives a different view to a user, translating sentences in the data, converting "kanji" in the data into "hiragana", or vice versa, selecting one data out of plural data to be output, and other processes.

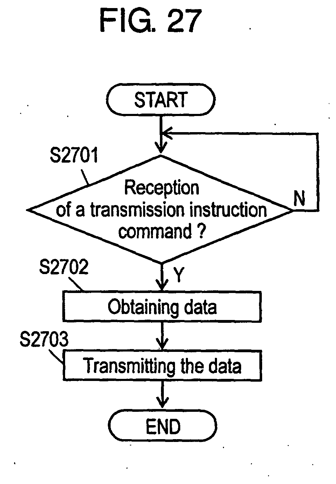

An operation of server device 261 is demonstrated hereinafter with reference to the flowchart shown in Fig. 27.

Step S2701: Transmission instruction command receiver 1103 determines whether or not it receives a transmission instruction command. Reception of the command prompts the step to move on to step S2702, and non-reception prompts the step to return to step S2701.

Step S2702: Data obtaining section 1104 obtains data from data memory 1102, where the data is identified by a data identifier owned by the transmission instruction command received by receiver 1103.

Step S2703: Data transmitter 1106 transmits the data obtained in step S2702 to information processing device 262.

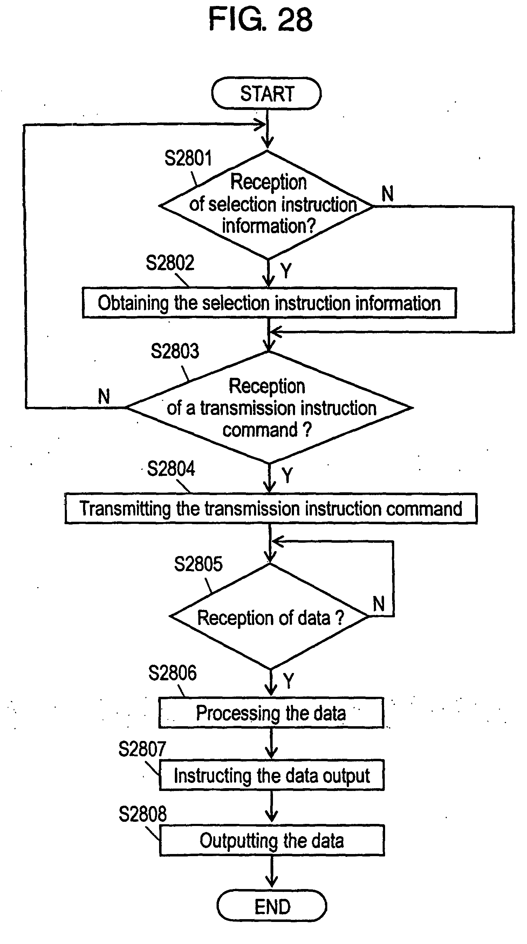

An operation of information processing device 262 in accordance with the third embodiment is demonstrated hereinafter with reference to the flowchart shown in Fig. 28.

Step S2801: Selection instruction information input receiving section 1201 determines whether or not it receives one piece or plural pieces of the selection instruction information. Reception of the information prompts the step to move on to step S2802, and non-reception prompts the step to jump to step S2803.

Step S2802: Selection instruction information obtaining section 26201 obtains one piece or plural pieces of selection instruction information.

Step S2803: Transmission instruction command input receiving section 1202 determines whether or not it receives an input of the transmission instruction command. Reception of the input prompts the step move on to step S2804, and non-reception prompts the step to return to step S2801.

Step S2804: Transmission instruction command transmitter 1204 transmits the transmission instruction command.

Step S2805: Data receiver 1205 determines whether or not it receives data from server device 261. The reception of the data prompts the step to move on to step S2806, and non-reception prompts the step to return to step S2805.

Step S2806: Data processor 26202 provides the data obtained in step S2805 with a given process based on the selection instruction information obtained in step 2802. The given process includes data filtering, translation, conversion of hiragana letters into kanji letters or vice versa, rearrangement of sub-data or others.

Step S2807: Data output instructing section 1206 gives data outputting section 1207 an instruction of outputting the data processed in step S2806.

Step S2808: Data outputting section 1207 outputs the data.

An example of the information processing system in accordance with the third embodiment is specifically demonstrated hereinafter. The system is formed of a server device and an information processing device (client) disposed on the Internet, and the server device stores a large number of homepages (HP) as data.

In the foregoing status, the case where the given process provided by the data processor is rearrangement of data is described hereinafter.

The information processing device displays the HP shown in Fig. 4. "BAG ZONE" (described in kanji letter) and "bag zone" (described in hiragana letters) indicate buttons (called also a hotspot) for jumping to the same HP. Selection of "BAG ZONE" prompts the data processor of the server device to treat this selection as a selection of the page by an adult, and to change descriptions of the script describing the pages such as HTML to such that an expensive bag comes first on the page in decreasing order for inviting adults to buy some bag. The following instance is used for rearranging the data in HP:

For instance, a description in the HP shown in Fig. 6 is available, in which a bitmap and a purchasing button are paired on one line respectively, and those pairs are arranged in column. Selection of the button with kanji letters thereon, e.g. "BAG ZONE", places bitmaps, which construct the data (HP), having a greater attribute value (a higher price in this case) on an upper column, and selection of the button with hiragana letters thereon, e.g. "bag zone", places the bitmaps having a smaller attribute value (a lower price in this case) on an upper column.

In the processes prepared as discussed above, depression of the "bag zone" button prompts the information processing device to edit the HP where a less expensive bag is listed on an upper column, and the information processing device outputs the HP shown in Fig. 8. As discussed above, the information processing device (client) changes the arrangement of sub-data forming the HP depending on the button a user depresses, then outputs the HP.

Data processing includes, e.g. translation, conversion of hiragana letters to kanji letters, and data-filtering as already discussed in the first embodiment.

According to the foregoing third embodiment, plural buttons (inclusive hotspots) are prepared, which buttons have an identical function or meaning but having different attribute values (color, shape, output letter, output place, and font, size and color of output letter), so that data can be provided in response to a button depressed. Therefore, tastes or attributes (a Japanese, an American or another) of users can be easily reflected to data output.

### Exemplary Embodiment 4

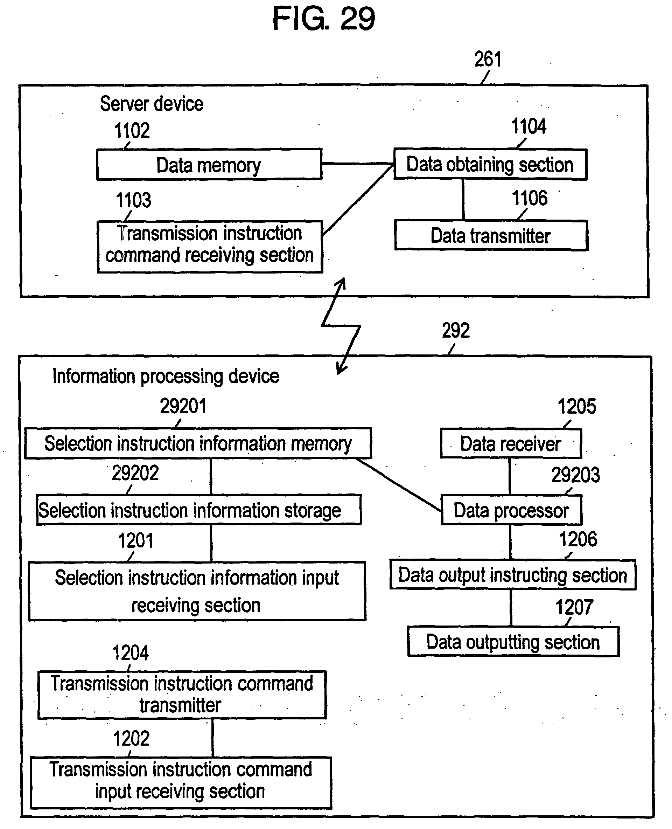

Fig. 29 shows a block diagram illustrating an information processing system formed of server device 261 and information processing device 292 in accordance with the fourth exemplary embodiment.

Information processing device 292 comprising the following elements:
selection instruction information input receiving section 1201;
selection instruction information memory 29201;
selection instruction information storage 29202;
transmission instruction command input receiving section 1202;
transmission instruction command transmitter 1204;
data receiver 1205;
data processor 29203
data output instructing section 1206; and
data outputting section 1207.

Selection instruction information memory 29201 stores one piece or plural pieces of selection instruction information, and selection instruction information memory 29201 can be a non-volatile recording medium such as a hard disc, or a volatile recording medium.

Selection instruction information storage 29202 stores the one piece or the plural pieces of selection instruction information received at receiving section 1201 in memory 29201, and is generally formed of software; however, it can be formed of an exclusive circuit (hardware).

Data processor 29203 provides the data received by data receiver 1205 with a given process based on the one piece or the plural pieces of selection instruction information stored in memory 29201. The given process includes filtering the data, rearranging sub-data forming the data for constructing a data which gives a different view to a user, translating sentences in the data, converting "kanji" in the data into "hiragana", or vice versa, selecting one data out of plural data to be output, and other processes. Data processor 29203 is generally formed of software; however, it can be formed of an exclusive circuit (hardware).

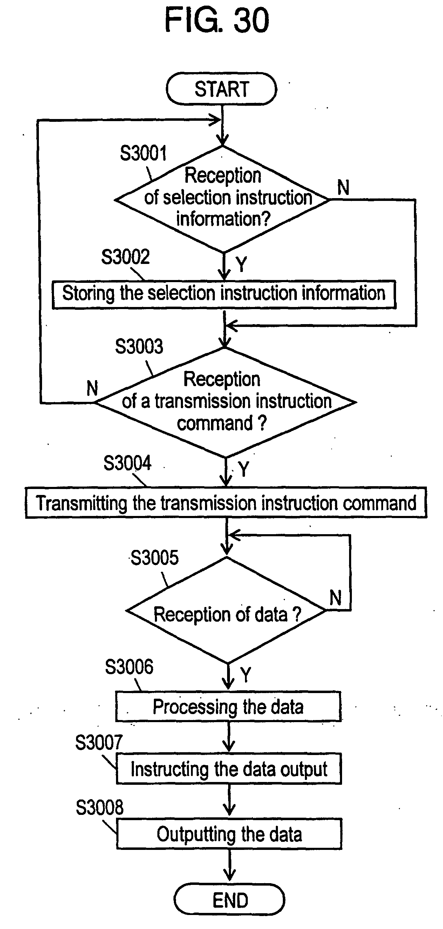

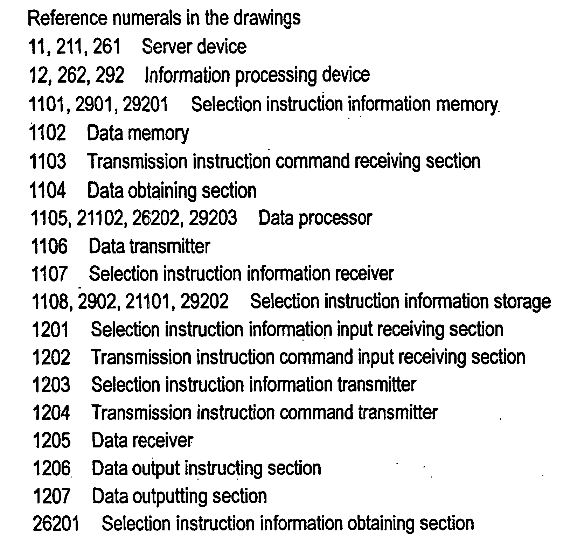

An operation of information processing device 292 is demonstrated hereinafter with reference to the flowchart shown in Fig. 30.

Step S3001: Selection instruction information input receiving section 1201 determines whether or not it receives one piece or plural pieces of selection instruction information. The reception of the information prompts the step to move on to step S3002, and non-reception prompts the step to jump to step S3003.

Step S3002: Selection instruction information storage 29202 obtains one piece or plural pieces of selection instruction information, and stores the information in memory 29201.

Step S3003: Transmission instruction command input receiving section 1202 determines whether or not it receives an input of the transmission instruction command. Reception of the input prompts the step move on to step S3004, and non-reception prompts the step to return to step S3001.

Step S3004: Transmission instruction command transmitter 1204 transmits the transmission instruction command.

Step S3005: Data receiver 1205 determines whether or not it receives data from server device 261. The reception of the data prompts the step to move on to step S3006, and non-reception prompts the step to return to step S3005.

Step S3006: Data processor 29203 provides the data obtained in step S3005 with a given process based on one piece or plural pieces of selection instruction information stored in memory 29201. The given process includes data filtering, translation, conversion of hiragana letters into kanji letters or vice versa, rearrangement of sub-data or others as discussed previously.

Step S3007: Data output instructing section 1206 gives data outputting section 1207 an instruction of outputting the data processed in step S3006.

Step S2808: Data outputting section 1207 outputs the data.

An example of the information processing system in accordance with the fourth embodiment is specifically demonstrated hereinafter. The system is formed of a server device and an information processing device (client) disposed on the Internet, and the server device stores a large number of homepages (HP) as data.

Suppose a user of an information processing terminal has worked on the HP as follows, which HP displays two or more than two buttons having different attribute values but executing an identical function:
Viewing the HP shown in Fig. 4, the user depressed the "BAG ZONE" (in kanji letter) button instead of the ''bag zone" (in hiragana letters) button. The user then depresses the "NEXT" button in English instead of the "next" button in hiragana letters in Fig. 9. The user further depresses the "¥" (Japanese YEN) button instead of the "$" (US dollar) button shown in Fig. 13. Then the user depresses the blue colored "registering" button instead of red colored "registering" button in Fig. 15. In the status discussed above, the selection instruction information is stored sequentially in memory 29201 by storage 29202. The selection instruction information here corresponds to an attribute value of one of the buttons. To be more specific, "BAG ZONE" button has an attribute value of a button with kanji letters thereon, "NEXT" button means a button with English thereon, the "¥" button means a button with "¥" thereon, and the blue colored registering button means a blue colored button. As such each one of those attribute values corresponds to the selection instruction information. Therefore, as shown in Fig. 23, the history of the selection instruction information is stored in the selection instruction information memory.

In such a case, when the information processing device requests the server device to transmit data, the server device searches the data memory for the target data, and provides the target data with data conversion (data processing) by using four pieces of selection instruction information. For instance, a HP in Fig. 24 showing a weather forecast written in hiragana letters for children to easily understand is stored in the data memory, and the selection instruction information shown in fig. 23 is also stored in the memory. In this case, this HP is converted into the one for an adult, a Japanese, a male who's favorite color is blue. The server device thus converts the HP shown in Fig. 24 into the HP in Fig. 25. The conversion includes change of hiragana letters to kanji letters, filtering of a video to delete (not to show the vides), change of the background color to blue. Another algorithm of HP conversion can be used.

According to the foregoing fourth embodiment, plural buttons (inclusive hotspots) are prepared, which buttons have an identical function or meaning but having different attribute values (color, shape, output letter, output place, and font, size and color of output letter), so that data can be provided in response to a button depressed. And yet, the data in response to the depression of plural buttons can be provided. Therefore, tastes or attributes (a Japanese, an American or another) of users can be easily reflected to data output.

As discussed above, according to the present invention, data suitable for a person can be easily supplied without inputting personal attribute.

### Industrial Applicability

The present invention relates to a method of outputting data, and an information processing device that outputs data available in a server device. The method and the devices allow outputting data suitable for a person without inputting personal attribute.

## Claims

1. A method of outputting data comprising the steps of:
a selection instruction reception step for receiving a button selection instruction for selecting one button out of a plurality of buttons which embody an identical function respectively, have different attribute values and are displayed on an input screen;
a selection instruction information recording step for recording selection instruction information related to the one button based on the selection instruction received at the selection instruction reception step; and
a data outputting step for changing data to be output based on the selection instruction information recorded in the selection instruction information recording step, and outputting the data.

2. The method of outputting data as defined in claim 1, wherein the data outputting step outputs data that is a homepage on an Internet.

3. The method of outputting data as defined in claim 1 or claim 2, wherein the data outputting step changes data to be output by filtering the data based on the selection instruction information recorded in the selection instruction information recording step.

4. The method of outputting data as defined in claim 1 or claim 2, wherein the data outputting step changes data to be output by changing a place of outputting data based on the selection instruction information recorded in the selection instruction information recording step.

5. The method of outputting data as defined in claim 1 or claim 2, wherein the data outputting step changes data to be output by providing the data with a given process based on the selection instruction information recorded in the selection instruction information recording step.

6. The method of outputting data as defined in claim 5, wherein the given process is a language conversion.

7. The method of outputting data as defined in claim 5, wherein the given process is conversion of a kanji letter into a hiragana letter.

8. The method of outputting data as defined in claim 5, wherein the given process is conversion of a hiragana letter into a kanji letter.

9. The method of outputting data as defined in claim 1 or claim 2, wherein the data outputting step changes a display by selecting and outputting one display data out of a plurality of display data, which can form the display, based on the selection instruction information recorded in the selection instruction information recording step.

10. A server device comprising:
a selection instruction information memory storing one piece or plural pieces of selection instruction information;
a data memory storing one pair or plural pairs of an data identifier and data;
a transmission instruction command receiving section for receiving a transmission instruction command of data having the data identifier;
a data obtaining section for obtaining the data from the data memory, which data forms the pair with the data identifier owned by the transmission instruction command;
a data processor for providing the data obtained by the data obtaining section with a given process based on the one piece or the plural pieces of selection instruction information stored in the selection instruction information memory; and
a data transmitter for transmitting the data processed by the data processor.

11. The server device as defined in claim 10, wherein the given process is data filtering.

12. The server device as defined in claim 10, wherein the given process is rearrangement of data.

13. The server device as defined in claim 10, wherein the given process is translation of a language.

14. The server device as defined in claim 10, wherein the given process is conversion of a hiragana letter.

15. The server device as defined in claim 10, wherein the given process is conversion of a kanji letter.

16. The server device as defined in claim 10, wherein the given process is selection of one display data output plural display data.

17. An information processing device comprising:
a selection instruction information memory storing one piece or plural pieces of selection instruction information;
a data receiver for receiving data;
a data processor for providing the data received by the data receiver with a given process based on the selection instruction information stored in the selection instruction information memory; and
a data outputting section for giving an instruction of outputting the data processed by the data processor.

18. The information processing device as defined in claim 17, wherein the given process is data filtering.

19. The information processing device as defined in claim 17, wherein the given process is rearrangement of data.

20. The information processing device as defined in claim 17, wherein the given process is translation of a language.

21. The information processing device as defined in claim 17, wherein the given process is conversion of a hiragana letter.

22. The information processing device as defined in claim 17, wherein the given process is conversion of a kanji letter.

23. The information processing device as defined in claim 17, wherein the given process is selection of one display data out of plural display data.
